# EUROPÄISCHE PATENTANMELDUNG

(11) **EP 1 445 496 A1**
(43) Veröffentlichungstag der Anmeldung: **11.08.2004**
(21) Anmeldenummer: 04002720.3
(22) Anmeldetag: 06.02.2004
(51) Int. Cl.: F16B 12/02, E04B 2/74, A47B 47/00

(54) **Modulare Gestellkonstruktion und ein daraus hergestelltes Möbel**

(30) Priorität: 06.02.2003 DE 20301896 U
(71) Anmelder: BAUR, Albert, D-86845 Grossaitingen (DE)
(72) Erfinder: BAUR, Albert, D-86845 Grossaitingen (DE)
(74) Vertreter: Fiener, Josef

(57) **Zusammenfassung**

Zur Schaffung einer modularen Gestellkonstruktion, die mit zumindest einem, insbesondere mehreren Verbindungselementen zu einem Gestell mit wenigstens einer Stange (20) und/oder einem Panelelement (10) verbindbar sind, wird vorgeschlagen, dass die Stange (20) und/oder das Panelelement (10) zumindest ein abgekröpftes Ende aufweist, das in entsprechend gestaltete Öffnungen (51) des Verbindungselementes (50) eingreift. Bevorzugt weist das Verbindungselement (50) die Form einer Scheibe auf, wobei Öffnungen (51) am Umfang insbesondere radial angeordnet sind.

## Beschreibung

Die Erfindung betrifft eine modulare Gestellkonstruktion gemäß dem Oberbegriff des Anspruches 1 und ein daraus hergestelltes Möbel.

Aus der CH 429 317 ist eine Rohrverbindung für den Gestellbau bekannt. Hierbei werden einzelne Rohre über kugelförmige Verbindungsköpfe miteinander verbunden. Dabei weist der Verbindungskopf mehrere Gewindebohrungen auf. Die Verbindung des Rohrs mit dem Verbindungskopf erfolgt mittels Keilhülsen, durch die jeweils eine Schraube hindurchgesteckt wird, die dann in die Bohrung des Verbindungskopfs eingeschraubt wird. Das Rohrende wird über die Keilhülse gesteckt und durch Anziehen der Schraube erfolgt eine Ausdehnung des Keilelementes. Ähnliche Konstruktionen sind auch aus den EP 0 400 345, EP 0 686 363 und DE 26 44 370 bekannt. Mit dem aus diesen Schriften bekannten System lassen sich verschiedene Gestelle konstruieren und Möbel zusammensetzen. Nachteilig ist jedoch zum einen die aufwendige Konstruktion, was durch die innenliegende Verschraubung bedingt ist. Überdies sind zur Verbindung etliche Teile notwendig, nämlich die Rohre und das Verbindungselement selber und darüber hinaus noch Schrauben und Keilhülsen. Durch diese aufwendige Gestaltung wird das Gestellsystem sehr teuer. Überdies ist es vergleichsweise unflexibel, da die Abstände der Verbindungsköpfe über die Stangenlänge die Grundmaße festlegen. Eine "Abzweigung" kann nur an Punkten erfolgen, an denen ein Verbindungskopf vorgesehen ist. Dadurch ist der Anwender an ein relativ starres Rastersystem gebunden. Vor allem beim Umbau des Gestellsystems bzw. bei Anpassungen an neue räumliche Begebenheiten erweist sich dies als nachteilig, da dann u.U. das Gestell nur dadurch an die geänderten räumlichen Begebenheiten anpassbar ist, indem Stäbe mit anderen, zuvor nicht verwendeten Längen eingesetzt werden.

Aufgabe der vorliegenden Erfindung ist es daher, eine Gestellkonstruktion bereitzustellen, die die aus dem Stand der Technik bekannten Nachteile verbessert und insbesondere einfach und flexibel im Auf- und Umbau ist, und überdies vergleichsweise günstig in der Herstellung.

Diese Aufgabe wird gelöst durch eine modulare Gestellkonstruktion nach Anspruch 1 und ein Möbel nach Anspruch 17. Vorteilhafte Ausgestaltungen sind Gegenstand der abhängigen Ansprüche.

Die modulare Gestellkonstruktion weist zumindest ein, insbesondere mehrere Panelelemente auf, die miteinander zu dem Gestell mit zumindest einem Verbindungselement verbunden sind. Das Panelelement weist zumindest ein abgekröpftes Ende auf, das in entsprechend gestaltete Öffnungen des Verbindungselementes einführbar ist und in diese eingreift. So können beispielsweise zwei Panelelemente durch eines oder mehrere Verbindungselemente verbunden werden. Das Verbindungselement weist zumindest eine, insbesondere mehrere gleichmäßig angeordnete Öffnungen auf, in die das Ende des Panelelementes einführbar ist. Je nach Anzahl und Anordnung der Öffnungen auf dem Verbindungselement sind so unterschiedlichste Gestellkonstruktionen und Gestaltungen von Gestellen möglich. Es können abgewinkelte oder geradlinige Gestelle aufgebaut werden. Vorteilhaft an der erfindungsgemäßen modularen Gestellkonstruktion ist, dass mit lediglich zwei Elementen, dem Verbindungselement und dem Panelelement, ohne dass weitere konstruktive Elemente notwendig wären, Gestelle in beliebiger Größe und Anordnung aufgebaut werden können. Bei Verwendung entsprechend stabiler Panelelemente wird eine selbsttragende Konstruktion erzielt. Durch das abgekröpfte Ende greift das Panelelement sicher in das Verbindungselement ein und wird dort arretiert.

Vorteilhaft ist weiter, dass das Verbindungselement an jeder beliebigen Stelle des abgekröpften Endes des Panelelementes angebracht werden kann. Es ist auf dem Panelelement verschiebbar, so dass prinzipiell an jeder beliebigen Stelle des Panelelementes ein Verbindungselement angebracht werden kann und an diesem Verbindungselement die Gestellkonstruktion weitergeführt werden kann, indem beispielsweise ein weiteres Panelelement angefügt wird. Dadurch werden überdies auch asymmetrische Konstruktionen möglich, wie sie insbesondere im modernen Möbelbau gewünscht werden. Durch die flexible Gestaltung ergeben sich nicht nur unzählige Gestaltungs- und Anordnungsmöglichkeiten, sondern auch vielfältige Vorteile. So sind Umbaumaßnahmen und Anpassungen an geänderte räumliche Begebenheiten problemlos möglich. Ein erfindungsgemäß hergestelltes Gestell ist leicht zu ergänzen, sowohl mit Hinblick auf die räumliche Dimension als auch im Hinblick auf das Anbringen von Zusatzfunktionen, wie z.B. Ablagen, Konsolen, Infoträgern etc. Es ist überdies flexibel im Transport und sehr rasch auf- und abbaubar.

Zudem können Versteifungen in Form von Drähten oder Seilen vorgesehen sein. Diese sind ebenfalls in den Verbindungselementen arretierbar und tragen zur Aussteifung der Gesamtkonstruktion bei. Für die Funktion sind diese grundsätzlich nicht notwendig, wie oben ausgeführt. Sollen jedoch weniger rigide Panelelemente verbaut werden, z.B. Leichtbaukonstruktionen mit Pappe oder dünnem Kunststoff, so ist eine zusätzliche Versteifung u.U. wünschenswert.

Zusätzlich können außerdem auch Stäbe vorgesehen sein, die sowohl mittig durch die Verbindungselemente hindurchgeführt werden können, als auch vorzugsweise in den Umfang der Verbindungselemente eingesteckt werden können. Mit Hilfe dieser Stäbe wird eine noch stabilere Konstruktion erzielt als sie aus dem Grundprinzip, bestehend aus Panelelementen und Verbindungselementen möglich ist. Überdies können an den Stäben weitere Elemente angebracht werden, z.B. in Form von Haken. Weiterhin können Stäbe im weitesten Sinne dazu verwendet werden, die Konstruktion als Ganzes im Sinne von Füßen abzustützen. Hierzu können die Stäbe auch teleskopartig oder höhenverstellbar gestaltet sein.

Die erfindungsgemäße modulare Gestellkonstruktion findet insbesondere im Möbelbau breite Anwendungsmöglichkeiten. Unter Möbelbau wird im Zusammenhang mit der vorliegenden Erfindung nicht nur Wohnmöbelbau verstanden, sondern beispielsweise auch Industrie- und Messebau. Als Anwendungsfälle seien beispielhaft aufgezählt: Wände, z.B. für Messen, Industrie oder privat, Regale, Raumteiler, Tische, Sideboards, Vitrinen, Kommoden, Präsentationsobjekte aller Art, Überdachungen, Verkaufstheken, Stühle, Hocker, Säulen, Gewächshäuser, Windschutzwände und dergleichen.

Nachfolgend wird die Erfindung anhand der Zeichnungen näher erläutert und beschrieben. Es zeigen:
- Fig. 1: eine Draufsicht auf eine erfindungsgemäße modulare Gestellkonstruktion;
- Fig. 2: eine Seitenansicht eines Verbindungselementes;
- Fig. 3: einen Schnitt durch ein Verbindungselement mit eingebrachten Stäben;
- Fig. 4: eine Draufsicht auf ein Verbindungselement;
- Fig. 5: eine Draufsicht auf ein plattenförmiges Element;
- Fig. 6: eine Seitenansicht des Endes eines Stabes;
- Fig. 7: eine Stirnansicht eines Stabes;
- Fig. 8: eine perspektivische Ansicht eines schalenförmigen Elementes eines Verbindungselementes
- Fig. 9: eine weitere perspektivische Ansicht des schalenförmigen Elementes der Fig. 8;
- Fig. 10: noch eine weitere perspektivische Ansicht des schalenförmigen Elementes der Fig. 8;
- Fig. 11: eine Draufsicht auf ein scheibenförmiges Element eines Verbindungselementes;
- Fig. 12: eine Draufsicht auf ein weiteres erfindungsgemäßes Verbindungselement;
- Fig. 13: eine Draufsicht auf noch ein weiteres erfindungsgemäßes Verbindungselement;
- Fig. 14: eine Draufsicht auf noch ein weiteres erfindungsgemäßes Verbindungselement;
- Fig. 15: eine Seitenansicht des Verbindungselementes der Fig. 14;
- Fig. 16: eine perspektivische, schematische Darstellung einer erfindungsgemäßen Gestellkonstruktion;
- Fig. 17: eine perspektivische, schematische Darstellung einer weiteren Gestellkonstruktion;
- Fig. 18: schematische Draufsichten auf Gestaltungsmöglichkeiten der erfindungsgemäßen Gestellkonstruktion; und
- Fig. 19: eine schematische Darstellung der erfindungsgemäßen Gestellkonstruktion zur Anwendung im Möbelbau.

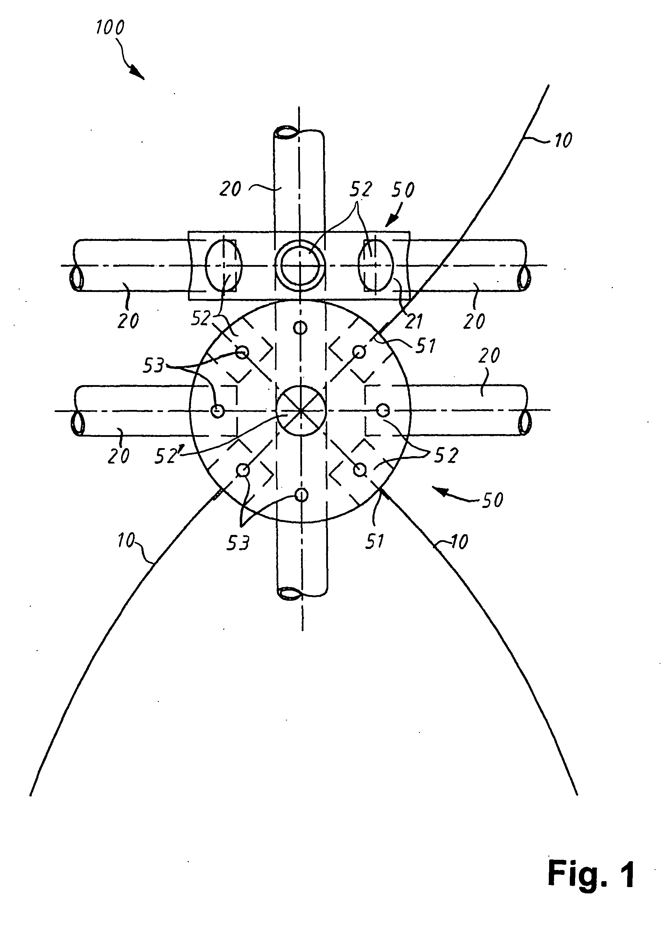

Fig. 1 zeigt zahlreiche Anordnungsmöglichkeiten der erfindungsgemäßen modularen Gestellkonstruktion. Das Gestell 100 der Fig. 1 ist aus zwei Verbindungselementen 50, drei Panelelementen 10 und sechs Stangen 20 aufgebaut. Wie aus der Zeichnung ersichtlich, greifen die Panelelemente 10 in die Verbindungselemente 50 ein. Hierfür sind schlitzartige Öffnungen 51 vorgesehen. Die Panelelemente 10 weisen ein abgekröpftes Ende auf (nicht dargestellt in Fig. 1) und greifen in die entsprechend gestaltete Öffnung 51 des Verbindungselementes 50 ein. Die Stangenenden 21 greifen in die Öffnungen 52 der Verbindungselemente 50 ein, die entsprechend gestaltet sind. Wie aus Fig. 1 ersichtlich, weist jedes Verbindungselement 50 mehrere Öffnungen 52 auf, in die die Stangen 20 eingeführt werden können. Das Verbindungselement 50 der Fig. 1 weist acht Öffnungen 52 auf, die um den Umfang des scheibenförmigen Verbindungselementes, dessen Form auch als Puck bezeichnet werden kann, herum angeordnet sind. Das Verbindungselement 50 kann jedoch auch abgerundet oder etwa kugelförmig ausgebildet sein. Die Anordnung der Öffnungen 52 erfolgt somit radial und kann auch als strahlenförmig bezeichnet werden. Somit ist es möglich, acht Stangen 20 um den Umfang des Verbindungselementes 50 herum einzuführen, die dann entsprechend den Strahlen einer Blume oder Sonne angeordnet sind. Wie sich aus Fig. 1 auch ergibt, verlaufen die Öffnungen 51 im selben Bereich wie die Öffnungen 52. Dies wird aus den weiteren Figuren deutlicher werden. Neben den Öffnungen 52, die auf dem Umfang, der auch als Mantel des zylindrischen Verbindungselementes 50 bezeichnet werden kann, vorgesehen sind, sind auch auf der Ober- bzw. Unterseite jeweils zumindest eine, insbesondere mittig angebrachte Öffnung zum Einführen von jeweils einer Stange 20 vorgesehen, die zur besseren Unterscheidung mit dem Bezugszeichen 52' versehen ist.

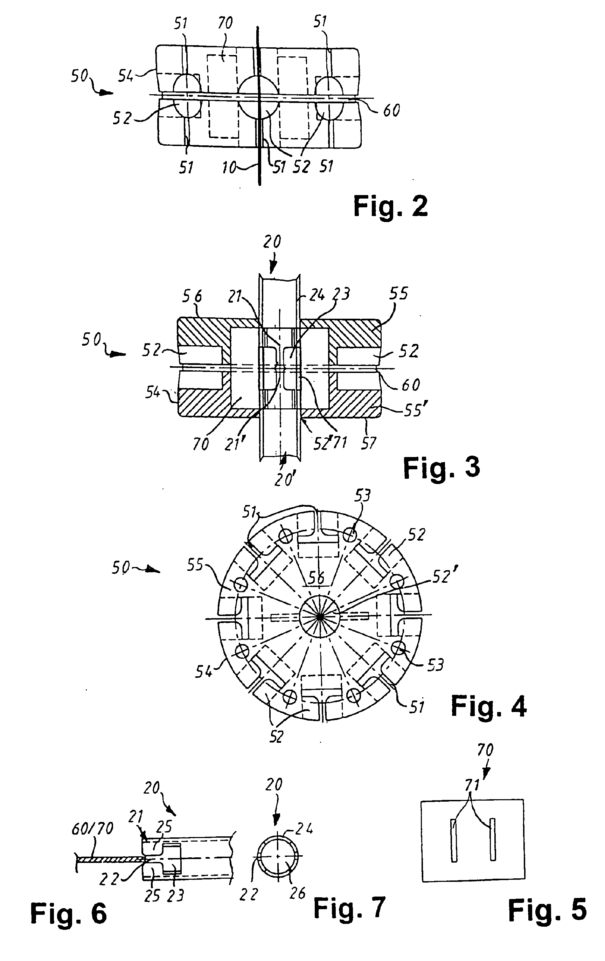

Die Fig. 2-4 zeigen unterschiedliche Ansichten des Verbindungselementes 50. Fig. 2 zeigt eine Seitenansicht, bei der jedoch innere Strukturen teilweise gestrichelt eingetragen worden sind. Fig. 3 zeigt einen Schnitt durch ein Verbindungselement 50, in das zwei Stangen 20, 20' eingeführt worden sind. Fig. 4 schließlich zeigt eine Draufsicht auf ein Verbindungselement 50. Es sind wiederum im inneren Bereich liegende Strukturelemente strichliert eingetragen. Aus den Fig. 2 und 3 wird ersichtlich, dass das Verbindungselement 50 aus mehreren Elementen besteht. Nach Außen hin wird es von zwei schalenförmigen Elementen 55, 55' begrenzt. Diese sind vorzugsweise aus Kunststoffmaterial, Metall oder aus Holz gefertigt. Sie dienen zum einen der Führung und einer gewissen Verankerung der Stangen 20. Weiterhin sind in diesen die Öffnungen 51 für die Panelelemente 10, die Öffnungen 52 für das Einführen der Stangen 20 und die Öffnungen 53 für das Einführen eines Drahtes oder Seiles zum Verspannen der Gestelle 100 (vgl. Fig. 4) ausgebildet. Überdies haben die schalenförmigen Elemente 55, 55' eine gewisse Schutzfunktion, da sie den Anwender vor Verletzungen mit u.U. scharfkantigen Elementen im Innenbereich des Verbindungselementes 50 bewahren. Zwischen den beiden schalenförmigen Elementen 55, 55' ist ein scheibenförmiges Element 60 vorgesehen. Wie aus den Fig. 2 und 3 ersichtlich, verlaufen die Ebenen der schalenförmigen Elemente 55, 55' und des scheibenförmigen Elementes 60 parallel. Das scheibenförmige Element 60 weist die schlitzförmigen Öffnungen 51 zum Einführen der Panelelemente 10 ebenso auf wie die schalenförmigen Elemente 55. Daneben ist das scheibenförmige Element 60 derart gestaltet, dass die Stangen 20 an diesen verankert werden können, indem Öffnungen ausgebildet sind, so dass die Stangen 20 mit entsprechend gestalteten Enden 21 (vgl. Fig. 6) eingreifen können und in dem scheibenförmigen Element 60 durch Verdrehen, d.h. in der Art eines Bajonettverschlusses, gesichert werden können. Hierdurch ist eine Fixierung und Arretierung der Stangen 20, die in die am Umfang 54 des scheibenförmigen Elementes 50 vorgesehenen Öffnungen 52 einführbar sind, möglich. Zur Verankerung der Stange 20, die von der Oberseite 56 bzw. zur Verankerung der Stange 20', die von der Unterseite 57 her in die entsprechenden Öffnungen 52' eingeführt wird, ist ein plattenförmiges Element 70 vorgesehen, dessen Ebene senkrecht auf den Ebenen der schalenförmigen Elemente 55, 55' und der scheibenförmigen Elemente 60 steht.

Wie aus Fig. 5 ersichtlich, weist das plattenförmige Element 70 zwei Öffnungen 71 auf. Wie sich aus den Fig. 5-7 ergibt, wird das plattenförmige Element 70 in die Öffnung 22 des Stangenendes 21 der Stange 20 eingeführt. Die Vorsprünge 25 greifen dann in die Öffnungen 71 ein. Durch leichtes Verdrehen der Stangen 20 erfolgt eine Arretierung der Vorsprünge 25 in den Öffnungen 71. Diese Drehbewegung wird durch die Verankerungsöffnungen 23 der Stange 20 ermöglicht. Wie sich insbesondere aus Fig. 3 ergibt, sind jeweils eine Stange 20 und 20' sowohl von der Oberseite 56 als auch von der Unterseite 57 her in die Öffnungen 52' des Verbindungselementes 50 einführbar, d.h. es genügt, ein plattenförmiges Element 70 um zwei Stangen 20, 20' in einem Verbindungselement 50 zu verankern. Die Stangen 20 sind hohl gestaltet, wie sich insbesondere aus den Fig. 3 und 7 ergibt. Die Wandung 24 begrenzt die Stangen nach außen; in ihr sind die zuvor beschriebenen Öffnungen und Vorsprünge ausgebildet. Die Gestaltung der Stangenenden 21 in geschlitzter Form, d.h. durch die geschlitzten Öffnungen 22, ergibt überdies vorteilhaft ein gewisses Auffedern der Enden 21 bzw. deren Hälften, so dass sich sowohl ein Formschluss als auch ein Reibschluss der Stangen 20 in den Verbindungselementen 50 und deren Öffnungen 52, 52' und in dem scheibenförmigen Element 60 und dem plattenförmigen Element 70 ergibt.

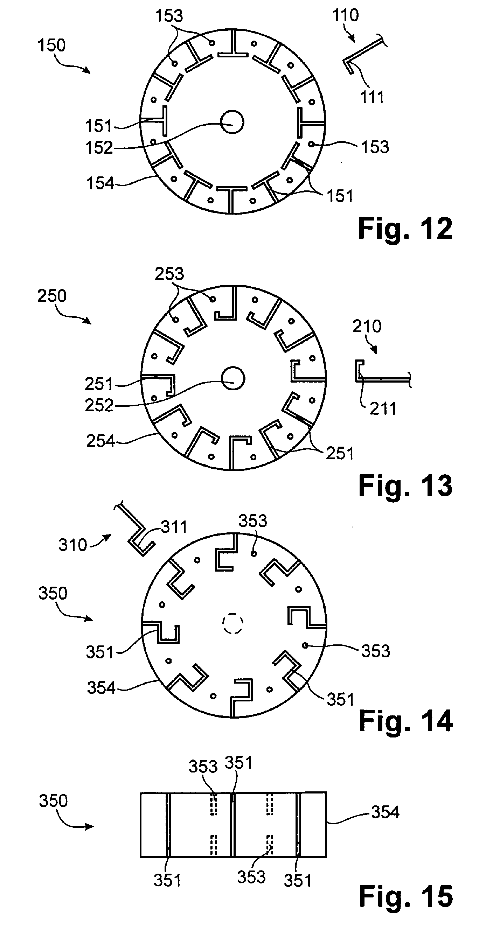

Wie insbesondere aus den Fig. 2 und 4 ersichtlich ist, sind die Öffnungen 51 und 52 am Umfang 54 des Verbindungselementes 50 übereinander angeordnet. Ein Panelelement 10 wird in eine Öffnung 51 eingeführt, wobei sich diese Öffnung 51 sowohl in den schalenförmigen Elementen 55, 55' als auch in dem scheibenförmigen Element 60 erstreckt, so dass die hierfür vorgesehenen Einschnitte übereinander liegen und so gemeinsam die Öffnung 51 bilden. In Fig. 2 ist durch die verdickte und durchgezogene Linie ein Panelelement 10angedeutet, so dass dessen Position deutlich wird. Aus der Draufsicht der Fig. 4 ergibt sich die besondere Gestaltung der Öffnungen 51. Im Ausführungsbeispiel der Fig. 4 sind diese T-förmig gestaltet. Die Enden der Panelelemente 10 sind entsprechend gestaltet, so dass diese in die T-förmigen Öffnungen 51 einführbar sind. Durch eine einander entsprechende Gestaltung der Enden der Panelelemente 10 und der Öffnungen 51 wird eine möglichst gute Verankerung der Panelelemente 10 in den Verbindungselementen 50 erzielt. Neben T-förmigen Gestaltungen sind auch andere vorgesehen, wie es sich beispielsweise aus den Fig. 12-14 ergibt. Auf der Oberseite 56 und der Unterseite 57 sind überdies Öffnungen 53 vorgesehen, in die ein Draht oder Seil zur zusätzlichen Verspannung der Gestelle 100 einführbar sind. Diese sind überwiegend im Bereich der schalenförmigen Elemente 55, 55' vorgesehen, so dass ein Draht beispielsweise in diese eingesteckt werden kann. Es ist bevorzugt vorgesehen, dass ebenso viele Öffnungen 53 wie Öffnungen 51 vorgesehen sind, um eine möglichst große Gestaltungsfreiheit zu haben, so dass sowohl das Einführen von Panelelementen als auch von Verspannungselementen, wie Draht oder Seil, an einer möglichst großen Zahl von Öffnungen 51 und 53 möglich ist, wodurch Gestelle in den unterschiedlichsten Winkeln und Anordnungen stabilisiert werden.

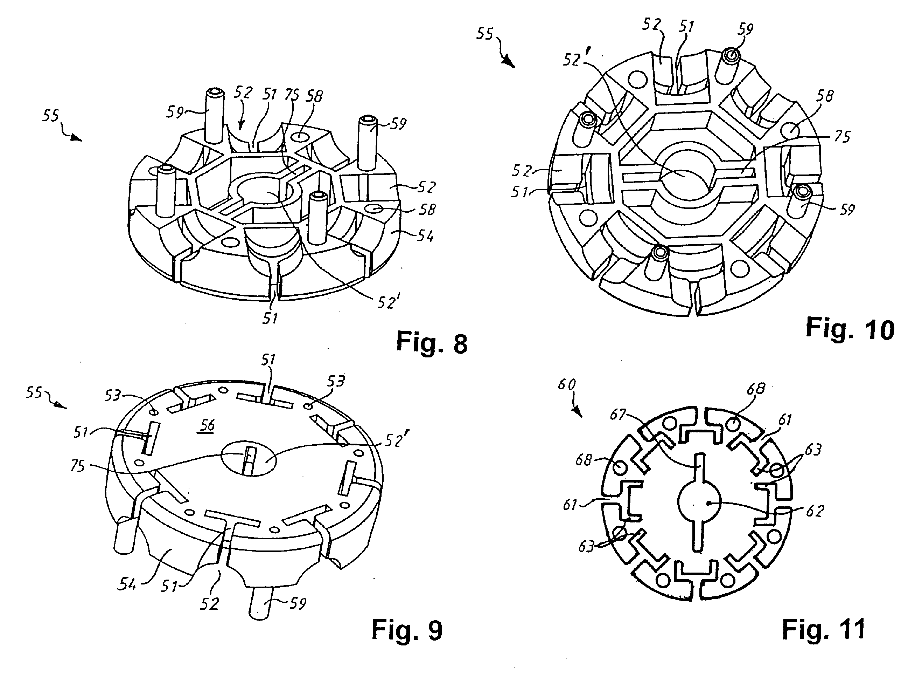

Die Fig. 8-10 zeigen ein schalenförmiges Element 55 in mehreren Perspektivansichten. Die Fig. 8 und 10 zeigen das schalenförmige Element 55 von der Unterseite her und die Fig. 9 von der Oberseite 56 her. Wie aus diesen Figuren deutlich wird, sind in einem schalenförmigen Element 55, das mit einem scheibenförmigen Element 60 und einem plattenförmigen Element 70 zu einem Verbindungselement 50 zusammensetzbar ist, verschiedene Öffnungen ausgebildet. So sind eine Anzahl, beispielsweise acht Öffnungen 51 vorgesehen, in die Panelelemente 10 einführbar sind. Wie anhand der Fig. 4 erläutert, sind die Öffnungen 51 T-förmig geschlitzt. Weiterhin ist eine Öffnung 52' auf der Oberseite 56, annähernd in der Mitte, ausgebildet. In diese und in die Öffnungen 52, die am Umfang 54 vorgesehen sind, sind Stangen 20 einführbar. Es wird deutlich, dass die Öffnungen 52 am Umfang 54 der Verbindungselemente 50 entstehen, indem zwei identische oder spiegelbildlich gestaltete, schalenförmige Elemente 55 und 55' zusammengebracht werden (vgl. Fig. 2). Folglich weist jedes schalenförmige Element 55 nur eine halbe Öffnung 52 am Umfang 54 auf. Weiterhin weist das schalenförmige Element 55 die Öffnung 75 auf, in die das plattenförmige Element 70 einführbar ist. Um je zwei schalenförmige Elemente miteinander zu verbinden und ineinander zu befestigen, sind Stifte 59 und entsprechende Öffnungen 58 vorgesehen, in die ein entsprechender Stift 59 des anderen schalenförmigen Elementes 55' einführbar sind. Die Stifte 59 und die entsprechenden Öffnungen 58 ermöglichen so, dass die Verbindungselemente 50 zusammengehalten werden.

Fig. 11 zeigt ein scheibenförmiges Element 60 in Draufsicht. Das scheibenförmige Element 60 weist mehrere Öffnungen auf. Wie anhand der Fig. 2 und 3 erläutert, wird es zwischen zwei schalenförmige Elemente 55 und 55' eingebracht. Hierfür weist das scheibenförmige Element 60 Öffnungen 68 auf, durch die die Stifte 59 der schalenförmigen Elemente 55 hindurchführbar sind. Dadurch werden die scheibenförmigen Elemente 60 an Ort und Stelle gehalten und ein Verrutschen der scheibenförmigen Elemente 60 im Verbindungselement 50, d.h. zwischen den schalenförmigen Elementen 55, 55', wird dadurch verhindert. Weiterhin weist es die Öffnungen 61 auf, die gemeinsam mit den entsprechenden Öffnungen der schalenförmigen Elemente 55 die Öffnung 51 ergeben, in die die gekröpften Enden der Panelelemente 10 einführbar sind. Entsprechend ist die Öffnung 61 ebenfalls T-förmig gestaltet. Darüber hinaus sind an deren Enden weitere Öffnungen 63 vorgesehen. Diese dienen, entsprechend den Öffnungen 71 der plattenförmigen Elemente 70, dem Arretieren der Stangen 20 in den entsprechenden Öffnungen 52 am Umfang 54 der Verbindungselemente 50. In Zusammenschau mit der Fig. 6 ergibt sich, dass das Stangenende 21 mit seiner Öffnung 22 über das plattenförmige Element 60 geführt wird, d.h. das plattenförmige Element 60 wird in die Öffnung 22 eingeführt. Die Vorsprünge 25 greifen dann in die Öffnungen 63 ein und die Stange 20 wird durch leichtes Verdrehen verankert, entsprechend der Verankerung im plattenförmigen Element 70 (siehe oben). Ferner weist das scheibenförmige Element 60 eine Öffnung 62 auf, die gemeinsam mit einer entsprechenden Öffnung auf dem schalenförmigen Element 55 die Öffnung 52' bildet, in die die Stange 20 von der Oberseite 56 bzw. Unterseite 57 des Verbindungselementes 50 her einführbar und arretierbar ist. Darüber hinaus ist eine schlitzförmige Öffnung 67 vorgesehen, durch die das plattenförmige Element 70 hindurchführbar ist. Aus einer Zusammenschau der Fig. 10 und 11 wird deutlich, dass das plattenförmige Element 70 in den Öffnungen 75 und 67 exakt geführt wird.

Aus den Fig. 8-11 wird weiter deutlich, dass ein Verbindungselement 50 auch dadurch geschaffen werden kann, indem zwei schalenförmige Elemente 55, 55' und ein scheibenförmiges Element 60, ohne ein plattenförmiges Element 70, zusammengebaut werden. Durch die Stifte 59 und die entsprechenden Öffnungen 58 und 68 wird eine stabile Konstruktion erzielt. Da kein plattenförmiges Element 70 vorgesehen ist, ist in diesem Fall eine Stange 20 durch die Öffnung 52 und 62 vollständig hindurchführbar, so dass das Verbindungselement 50 über einer Stange verschiebbar ist und eine Anordnung möglich wird, ohne dass ein Stangenende 21 an dieser Stelle vorhanden sein muss. Dies ist insbesondere dann von Nutzen, wenn eine Stange durch ein Verbindungselement 50 hindurchgeführt werden soll, d.h. sowohl auf der Oberseite 56 als auch auf der Unterseite 57 ansetzen soll, da anderenfalls, d.h. bei Vorhandensein des plattenförmigen Elementes 70, zwei Stangen 20 angesetzt werden müssen. Das scheibenförmige Element 60 und das plattenförmige Element 70 sind vorzugsweise aus Metall gefertigt, um stabile Verankerungen zu erzielen. Daneben ist jedoch auch die Ausbildung aus Kunststoff oder anderen, festen Materialien vorgesehen.

Die Fig. 12-15 zeigen weitere Ausbildungen bevorzugter Gestaltungen der Verbindungselemente und der entsprechenden Panelelemente. Dargestellt sind in den Fig. 12-14 Draufsichten und in Fig. 15 eine Seitenansicht des Verbindungselementes der Fig. 14. Die Fig. 12-15 dienen sowohl der Illustration weiterer Gestaltungsmöglichkeiten der Öffnungen 51 und der entsprechenden Enden der Panelelemente 10, als auch der Erläuterung des Grundprinzips der vorliegenden Erfindung. Die Verbindungselemente 150, 250, 350 sind einstückig gestaltet, im Gegensatz zum Verbindungselement 50, das aus zumindest drei Bestandteilen, nämlich den schalenförmigen Elementen 55, 55' und einem scheibenförmigen Element 60 besteht. Wie oben allgemein ausgeführt, können ein Verbindungselement und ein Panelelement, ohne dass Stangen oder Verspannelemente benötigt würden, zusammengesetzt werden zu einer stabilen und selbstragenden Gestellkonstruktion. Dies wird anhand der Fig. 12-15 deutlicher werden. Fig. 12 zeigt das Verbindungselement 150. Es weist Öffnungen 151 auf, die am Umfang 154 radial angeordnet und insbesondere gleichmäßig verteilt sind. Im Ausführungsbeispiel der Fig. 12 und 13 sind zwölf Öffnungen vorgesehen. In die Öffnung 151 ist ein entsprechend abgekröpftes Ende eines Panelelementes 110 einführbar. Die Öffnung 151 ist T- oder L-förmig gestaltet, wie die des Verbindungselementes 50. Entsprechend ist das Ende 111 des Panelelementes 110 T- oder L-förmig abgekröpft. In die Öffnung 151 des Verbindungselementes 150 sind nun jeweils ein Panelelement 110 einführbar, d.h. insgesamt zwölf Panelelemente 110. Folglich kann von jeder der zwölf Öffnungen 151 ausgehend ein Panelelement 110 angesetzt werden, so dass für den Fachmann ersichtlich ist, dass die verschiedensten Winkelbildungen und -ausgestaltungen möglich werden. Geradlinige Ausführungen sind ebenso möglich wie abgewinkelte oder geschwungene Formen.

Zusätzlich weist das Ausführungsbeispiel der Fig. 12 Öffnungen 153 auf, in die Drähte oder Seile zum Verspannen einführbar sind. Dadurch erweitern sich die Anwendungsmöglichkeiten, da auch weniger rigide Panelelemente 110 eingesetzt werden können, beispielsweise solche aus Textilmaterialien oder Pappe. Es werden folglich Verspannungen zwischen benachbarten Verbindungselementen 150 ausgeführt. Weiterhin ist eine Öffnung 152 vorgesehen, in die Stangen 20 einführbar und insbesondere hindurchführbar sind. Die Fig. 13 zeigt eine Ausgestaltung, die der Ausführung in Fig. 12 gleicht. Das Verbindungselement 250 weist die Öffnungen 251, 252 und 253 auf, deren Funktion anhand der Fig. 12 beschrieben wurden. Die Öffnung 251 ist L-förmig gestaltet, im Gegensatz zur T-förmigen Gestaltung der Fig. 12. Auch in die Öffnung 251 ist ein entsprechendes, abgekröpftes Ende 121 eines Panelelementes 120 einführbar.

In Fig. 14 wird noch eine weitere Gestaltung eines Verbindungselementes 350 gezeigt. Die Öffnung 351 zeigt noch eine weitere Ausgestaltung. Sie ist verwinkelter und ermöglicht so einen besonders guten Halt des entsprechend abgekröpften Endes 311 des Panelelementes 310. Es sind hier acht Öffnungen 351 vorgesehen. Ferner sind auch entsprechende Öffnungen 353 für Verspannelemente vorgesehen. Aus der Seitenansicht der Fig. 15 ergibt sich, dass die Öffnungen 351 schlitzförmig sind und sich durch das gesamte Verbindungselement 350 hindurch erstrecken. Im Gegensatz dazu handelt es sich bei den Öffnungen 353 um Bohrungen, die sowohl sich über die gesamte Höhe des Verbindungselementes 350 erstrecken können, als auch, wie in Fig. 15 dargestellt, nur in Teilbereichen. Die Verbindungselemente 150, 250, 350 sind vorzugsweise massiv gestaltet, beispielsweise aus Kunststoff, Holz, Metall oder Mischmaterialien. Dabei können diese auch als Rollen dienen, wozu bevorzugt am Umfang 54 Gummiringe aufgezogen sind.

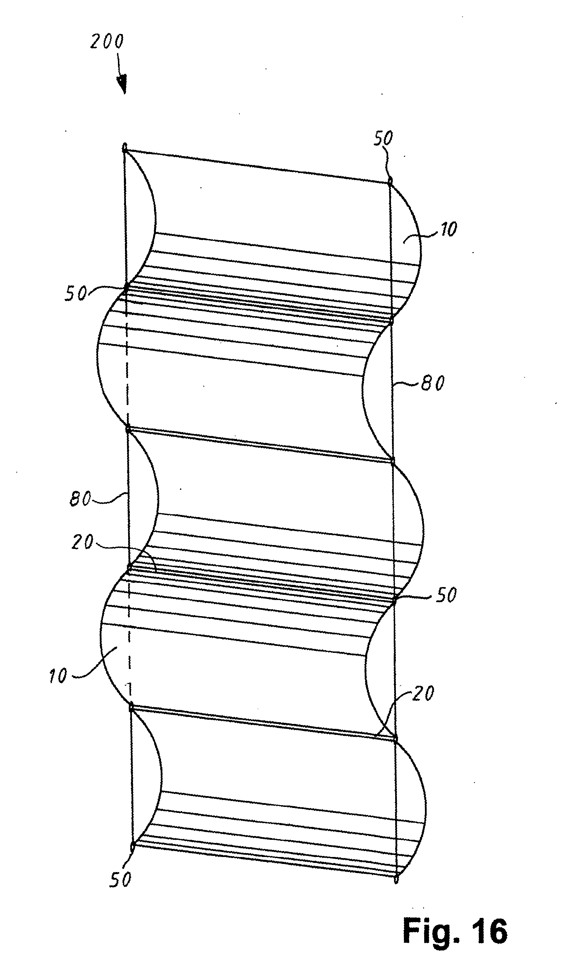

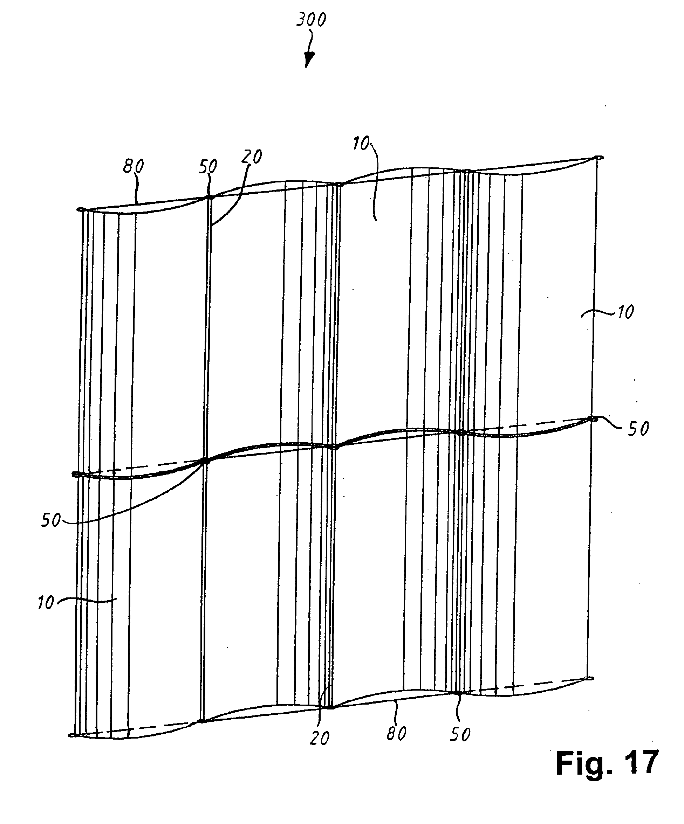

In den Fig. 16-19 sind jeweils Anordnungsmöglichkeiten und Gestellkonstruktionen dargestellt. Für deren Beschreibung werden die in den Fig. 1-11 verwendeten Bezugszeichen verwendet. Die Konstruktionen sind jedoch auch mit den Verbindungselementen und Panelelementen der Fig. 12-15 aufzubauen. Der Einfachheit halber wird jedoch eine einheitliche Beschriftung gewählt. In den Fig. 16 und 17 sind Gestelle 200 und 300 dargestellt. Es sind jeweils eine Anzahl an Verbindungselementen 50, Panelelementen 10, Stangen 20 und Drähten 80 miteinander verbunden. Es wird deutlich, dass die Panelelemente 10 in einer geschwungenen Anordnung eingesetzt werden. Ihre abgekröpften Enden werden dementsprechend in die Öffnungen 51 der Verbindungselemente 50 eingeführt. Stangen 20 werden in die Öffnungen 52' der Verbindungselemente 50 eingeführt. Sie können prinzipiell auch entfallen. Weiterhin erfolgt eine Querverspannung mit Hilfe von Drähten 80, die in die Öffnungen 53 der Verbindungselemente 50 einführbar sind. Auch diese können bei entsprechend ausgesteiften Panelelementen 10 entfallen.

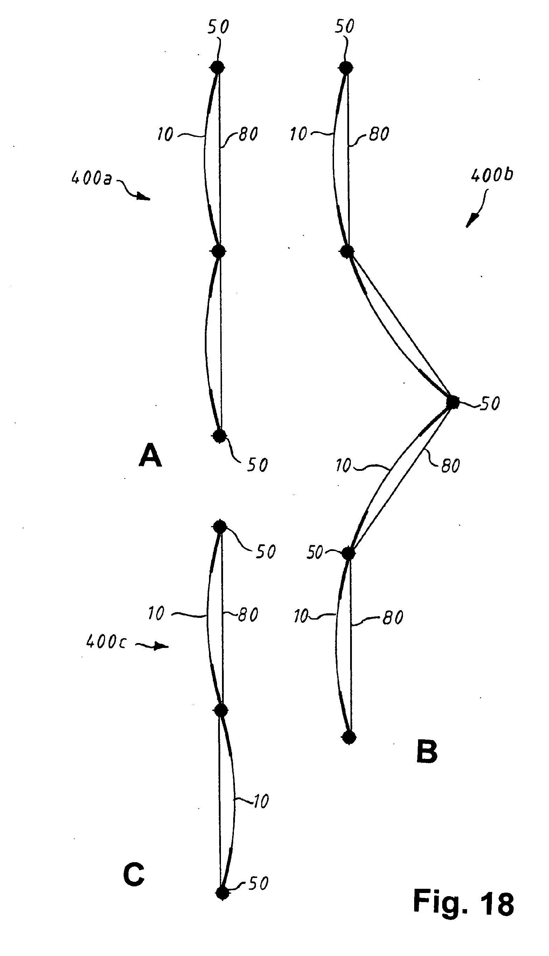

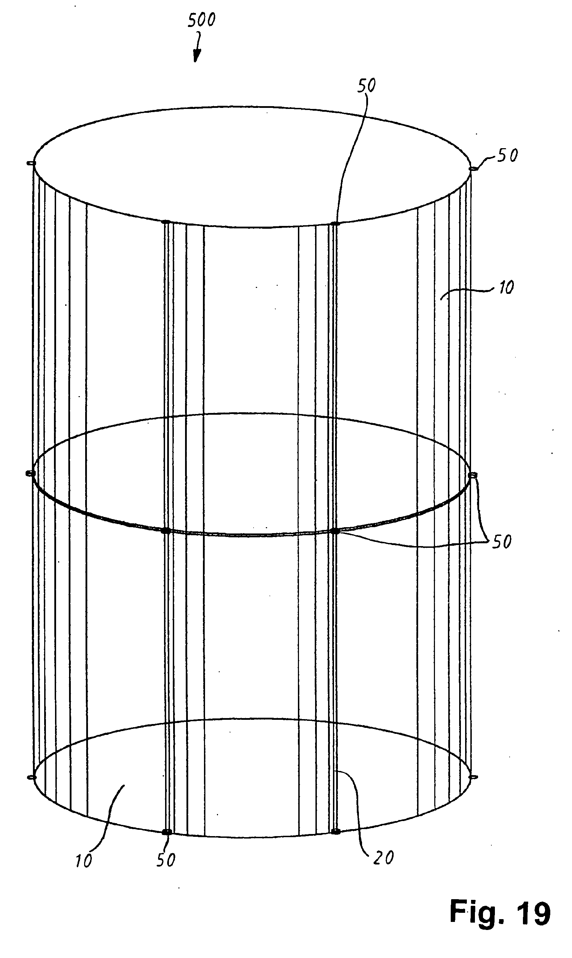

Die Gestelle 200 und 300 können beispielsweise als Raumteiler oder als Basis für Regalbau verwendet werden. Bei entsprechender Ausgestaltung der Panelelemente 10 können sie beispielsweise auch als Werbeträger verwendet werden. Die Panelelemente 10 können, was Form, Farbe, Materialwahl und sonstige Gestaltungsmerkmale betrifft, beliebig ausgestaltet sein. Entscheidend ist vielmehr das Vorhandensein der entsprechend den Öffnungen 51 gestalteten, abgekröpften Enden. So zeigt Fig. 18 schematisch eine Draufsicht auf Gestelle 400a, 400b und 400c (Fig. 18A, 18B, 18C). Es sind stets dieselben Panelelemente 10 eingesetzt. Deutlich wird, dass die variierende Gestaltung sich lediglich durch entsprechendes Ansetzen in den Öffnungen 51 der Verbindungselemente 50 ergibt. Zusätzlich zu den Panelelementen 10 sind Drähte 80 vorgesehen, die der Verspannung dienen. Fig. 19 zeigt schließlich eine Anordnung, mit der ein zylinderförmiges Gestell 500 ermöglicht wurde. Auch das Gestell 500 kann durch bloßes Aneinanderfügen von Panelelementen 10 und Verbindungselementen 50 ausgebildet werden. Zusätzlich sind im Ausführungsbeispiel der Fig. 19 noch Stangen 20 vorgesehen. Auf eine derartige zylinderförmige Konstruktion kann beispielsweise eine Tischplatte aufgelegt werden, wodurch beispielhaft die Verwendung der erfindungsgemäßen Gestellkonstruktion im Möbelbau verdeutlicht wird. Dabei kann entlang den Stangen auch eine Blende oder Kabelkanalführung aufgeklipst werden, um Stromkabel zu Leuchten oder dergleichen verdeckt zu führen.

## Patentansprüche

1. Modulare Gestellkonstruktion, die mit zumindest einem, insbesondere mehreren Verbindungselementen zu einem Gestell mit wenigstens einer Stange und/oder einem Panelelement verbindbar sind, **dadurch gekennzeichnet, dass** die Stange (20) und/oder das Panelelement (10, 110, 210, 310) zumindest ein abgekröpftes Ende (111, 211, 311) aufweist, das in entsprechend gestaltete Öffnungen (51, 151, 251, 351) des Verbindungselementes (50, 150, 250, 350) eingreift.

2. Gestellkonstruktion nach Anspruch 1, **dadurch gekennzeichnet, dass** das Verbindungselement (50, 150, 250, 350) die Form einer Scheibe aufweist und die Öffnungen (51, 151, 251, 351) am Umfang (54), insbesondere radial, angeordnet sind.

3. Gestellkonstruktion nach Anspruch 1 oder 2, **dadurch gekennzeichnet, dass** zusätzlich Öffnungen (52, 52', 152, 252) vorgesehen sind, in die Stangen (20) einsteckbar sind.

4. Gestellkonstruktion nach einem der vorangegangenen Ansprüche, **dadurch gekennzeichnet, dass** das Verbindungselement (150, 250, 350) einstückig ist.

5. Gestellkonstruktion nach einem der Ansprüche 1-3, **dadurch gekennzeichnet, dass** das Verbindungselement (50) aus zumindest zwei schalenförmigen Elementen (55, 55') besteht, die in ihrem Inneren ein scheibenförmiges Element (60) umgeben, wobei die schalenförmigen Elemente (55, 55') und das scheibenförmige Element (60) parallel zueinander angeordnet sind, so dass das Panelelement (10, 110, 210, 310) in entsprechende Öffnungen (51, 61) sowohl des schalenförmigen Elementes (55, 55') als auch des scheibenförmige Elementes (60) eingreift.

6. Gestellkonstruktion nach Anspruch 5, **dadurch gekennzeichnet, dass** das scheibenförmige Element (60) Öffnungen (63) aufweist, in die Vorsprünge (25) des Stangenendes (21) der Stange (20) eingreifen, wodurch die Stange (20) im Verbindungselement (50) arretierbar ist, so dass die Stange am Umfang (54) des Verbindungselementes (50) anordenbar ist.

7. Gestellkonstruktion nach Anspruch 5 oder 6, **dadurch gekennzeichnet, dass** zusätzlich im Inneren des Verbindungselementes (50) ein, insbesondere im rechten Winkel angeordnetes, plattenförmiges Element (70) vorgesehen ist, das Öffnungen (71) aufweist, so dass Stangen (20) über Öffnungen (52') der Oberseite (56) und/oder Unterseite (57) des Verbindungselementes (50) einführbar sind und über Vorsprünge (25) des Stangenendes (21) der Stange (20) in den Öffnungen (71) arretierbar sind.

8. Gestellkonstruktion nach Anspruch 6 oder 7, **dadurch gekennzeichnet, dass** die Arretierung der Stangen (20) in der Art eines Bajonettverschlusses erfolgt.

9. Gestellkonstruktion nach einem der vorangegangenen Ansprüche, **dadurch gekennzeichnet, dass** zusätzlich Öffnungen (53, 153, 253, 353) zum Einstecken von Spannelementen, insbesondere Drähten (80) oder Seilen, vorgesehen sind.

10. Gestellkonstruktion nach Anspruch 9, **dadurch gekennzeichnet, dass** die Öffnungen (53, 153, 253, 353) auf der Oberseite (56) und/oder Unterseite (57) des Verbindungselementes (50, 150, 250, 350) vorgesehen sind.

11. Gestellkonstruktion nach einem der vorangegangenen Ansprüche, **dadurch gekennzeichnet, dass** die Öffnungen (51, 52, 53, 151, 153, 251, 253, 351, 353) radial angeordnet sind, insbesondere gleichmäßig in Teilungen von 10-180°, vorzugsweise in Teilungen von 15°, 30°, 45° und 90°.

12. Gestellkonstruktion nach einem der vorangegangenen Ansprüche, **dadurch gekennzeichnet, dass** die Fixierung des Panelelementes (10, 110, 210, 310), der Stange (20) und/oder des Spannelementes, insbesondere des Drahtes (80) oder Seiles, durch Formschluss und/oder Reibschluss erfolgt.

13. Gestellkonstruktion nach einem der vorangegangenen Ansprüche, **dadurch gekennzeichnet, dass** das Verbindungselement (150, 250, 350) aus Kunststoff besteht.

14. Gestellkonstruktion nach einem der vorangegangenen Ansprüche, **dadurch gekennzeichnet, dass** die schalenförmigen Elemente (55, 55') ,das scheibenförmige Element (60), das plattenförmige Element (70) oder das Panelelement (10, 110, 210, 310) aus Metall oder Kunststoff bestehen.

15. Gestellkonstruktion nach einem der vorangegangenen Ansprüche, **dadurch gekennzeichnet, dass** das Panelelement (10, 110, 210, 310) ein T-förmiges, L-förmiges, wellenförmiges oder gewinkeltes Ende (111, 211, 311) aufweist.

16. Gestellkonstruktion nach einem der vorangegangenen Ansprüche, **dadurch gekennzeichnet, dass** Füße in die Öffnungen (52, 52', 152, 252) einführbar sind, wobei diese insbesondere höhenverstellbar sind.

17. Möbel zusammengebaut unter Verwendung einer Gestellkonstruktion nach einem der vorangegangenen Ansprüche, wobei die Möbel insbesondere als Wände, Regale, Raumteiler, Tische, Sideboards, Vitrinen, Kommoden, Präsentationsobjekte, Überdachungen, Verkaufstheken, Stühle, Hocker oder Säulen ausgebildet sind.
